# EUROPEAN PATENT SPECIFICATION

(11) **EP 0 367 632 B1**
(45) Date of publication and mention of the grant of the patent: **28.04.1993**
(21) Application number: 89311459.5
(22) Date of filing: 06.11.1989
(51) Int. Cl.: F02M 55/02, F02M 55/00, F02M 63/00, F16L 55/10

(54) **Wax filled fuel pipes for diesel engines**
Mit Wachs gefüllte Kraftstoff-Rohre für Dieselmotoren
Conduits de carburant remplis de cire pour moteurs diesel

(30) Priority: 04.11.1988 GB 8825869
(43) Date of publication of application: 09.05.1990
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR)
(72) Inventor: Davies, Cedric Paul, Great Totham Maldon Essex (GB)
(74) Representative: Messulam, Alec Moses

(56) References cited:
- EP-A- 0 186 262
- AT-B- 291 882
- DE-C- 477 745
- US-A- 3 496 952
- US-A- 4 111 365
- US-A- 4 671 230
- OIL AND GAS JOURNAL. vol. 84, no. 33, October 1986, TULSA US pages 63 - 65;ROBERT T. GILCHRIST JR.: "CALCULATION AID BREAKING OF WAX-PLUGGED LINES"

## Description

The present invention relates to a device, notably to a means whereby a fuel pipe in a diesel engine can be primed with fuel when it contains air, and to a method for priming such a diesel engine.

In a diesel engine, fuel is fed from an injector pump through fuel lines to injectors serving each cylinder bore so that the fuel is fed in regulated amounts through each injector in the desired sequence. The injector pump has to generate sufficient pressure in each pulse of fuel fed to a fuel line to overcome the back pressure of outlet valves in the injectors.

Hitherto, the injector pump has incorporated non-return valve means which isolate the fuel line serving one cylinder from those serving other cylinders so that fuel is usually fed from the pump in the desired sequence to only one fuel line at a time. The valve means also serves to prevent fuel in the lines bleeding back into the pump when the engine is at rest. Thus, once the fuel system of a diesel engine has been primed, it will remain full of fuel at all times and each actuation of the valve means causes a pulse of pressurised fuel to enter the cylinder bore.

However, with a new engine where the fuel lines are empty or if a fuel line becomes emptied of fuel, for example during repair or maintenance of the engine or when the engine runs out of fuel, the injector pump and fuel lines will contain air. Since this is readily compressible, whereas the fuel is not, it may not be possible for the injector pump to generate sufficient pressure in the fuel lines to expel the air through the injectors. It is therefore necessary to provide means for bleeding air from the system so that fuel at low pressure can displace the air to allow the system to be filled with fuel. However, this is a time consuming operation and cannot be practised during the initial assembly and testing of a new engine both for time reasons and because it results in some fuel leakage which would mask other tests for fuel, lubricant and coolant leaks on the assembled engine.

Typically, the valves used at the outlets from the injector pump hitherto have been non-return valves. However, in order to meet emission control requirements, it has been necessary to modify the design of the valve so that it no longer retains its non-return character. As a result, the fuel line is not sealed off once it has received its pressure pulse of fuel from the injector pump, and air or fuel in the line can bleed back into the injector pump. It has therefore become even more difficult to rid the injector pump and fuel lines of air once this is present in the system. This is a particular problem when a new engine is first assembled and although it would be possible in some cases progressively to bleed the air from the injector pump and each of the fuel lines in turn, this is impracticable on an assembly line for the reasons given above.

The present invention seeks to provide a device and method of operation whereby the above problems can be reduced.

Accordingly, the present invention provides a fuel conduit adapted for mounting in the fuel system of a diesel engine between the outlet from the fuel injector pump and the inlet to an injector through which fuel is to be fed to a cylinder bore of the engine, characterised in that the conduit contains a material which is normally non-mobile under ambient conditions but which can be moved and/or becomes mobile when contacted with diesel fuel under pressure, which material can be passed through the injector and through the diesel engine during its compression and exhaust strokes without causing damage to the engine (hereinafter referred to as a material of this type).

The invention further provides a method for starting up a diesel engine characterised in that the fuel conduits between the injector pump and the injectors through which fuel is fed to the cylinder bores of the engine are substantially filled initially with a material of this type, and starting the engine so that the material is passed through the injectors and through the engine without causing damage to the engine.

The invention is of particular use with diesel engines, in which the outlet or delivery valve means of the injector pump does not fully seal off each fuel conduit, that is where the valve is of the reverse flow damping type as it is known, since the use of the invention minimises the need for bleeding of air from the fuel conduits and this has been a problem with engines having such a valve. For convenience the invention will be described hereinafter in terms of such engines, although it will be appreciated that the invention can also be applied to diesel engines having conventional non-return valves.

The conduits for present use are conveniently fuel pipe lines of the conventional design and construction and the term fuel pipe will be used herein to denote all types of such fuel conduits.

The material of this type is one which is non-mobile under ambient conditions but which can be moved or becomes mobile when contacted with the diesel fuel under pressure so that it can flow out of the fuel pipe as fuel is fed into the pipe from the injector pump. The material of this type may be a solid or expanded material which has been injected into the fuel line and which is readily dissolved by the diesel fuel. Thus, the material can be a solid plug within the fuel pipe which is readily dissolved on with the fuel entering the pipe so that the fuel/material mixture progressively displaces the material plug or infill until the fuel pipe is filled with the mixture which is then free to flow into the cylinder bore through the injector.

However, it is preferred to use a material which is rendered mobile or can be made to move by the application of pressure so that the material flows out of the fuel pipe into the cylinder bore ahead of the fuel fed into the pipe by the injector pump. The material can be a thixotropic material which is rendered mobile by the working effect of the repeated pulses of fuel striking it, but is preferably a room temperature solid wax, grease or similar material which is capable of cold flow under pressure. For convenience, the invention will be described hereinafter in terms of the the use of a cold flow hydrocarbon wax.

The invention can be carried out by filling the fuel pipes of a diesel engine in situ with the wax whenever the pipes have become contaminated with air, for example after repair or servicing of the engine or injector pump. However, the invention is especially of use during the initial assembly of new engines and, for convenience, the invention will be described in terms of this use of the invention. For such use, the fuel pipes are usually pre-filled and assembled into a group of pipes in a suitable harness or yoke for assembly as a unit onto the engine.

The invention thus further provides a plurality of the fuel conduits of the invention arranged in parallel with one another and retained as a group by one or more connecting members.

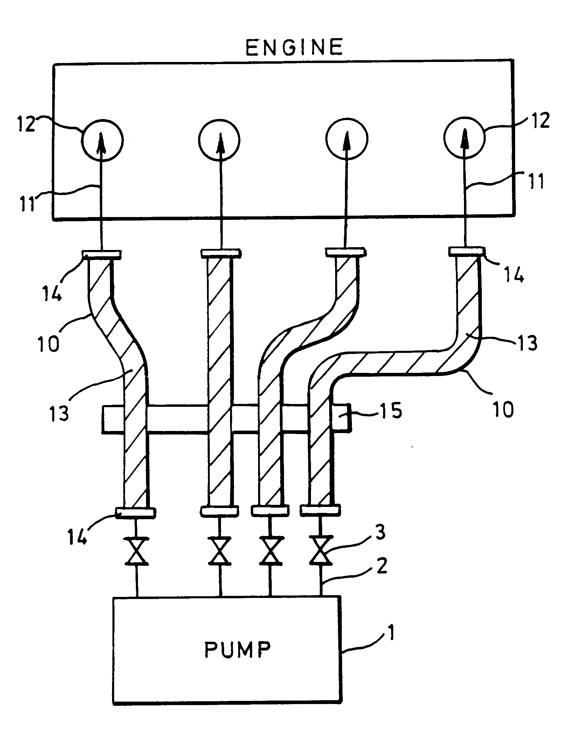

To aid understanding of the invention, it will now be described with reference to a preferred embodiment as shown in the accompanying drawing which is a diagrammatic block diagram of the fuel system for a diesel engine.

An injector pump 1 of conventional design and construction is provided with a series of outlets 2 to which are connected the fuel pipes serving the cylinders of the engine. Each outlet incorporates a valve 3 which is of the reverse flow damping type, notably a snub valve which can be of conventional design and construction.

The pump 1 feeds fuel through the outlets 2 to a number of fuel pipes 10 (only four are shown) each serving a separate injector 11 for feeding fuel to a cylinder bore 12 of the engine (not shown) . According to the invention, for the initial start up of the engine, the fuel pipe 10 is substantially filled with a suitable wax 13 so that the pressurised fuel output from the injector pump 1 acts on a substantially non-compressible material and can displace that through the injector as it is fed into the fuel pipe 10.

The wax 13 can be injected into the fuel pipe 10 in situ, for example by removing the fuel pipe and injecting the wax under pressure until the pipe is filled. However, this requires extra equipment and a further operation during the final assembly and testing of the engine. It is therefore preferred to provide the fuel pipes 10 as pre-filled items which contain the desired wax and have the necessary fittings 14 at each end thereof for effecting connection to the pump outlet and the injector inlet.

It is also preferred to mount the requisite number of pre-bent fuel pipes in a yoke 15 so that a complete pre-assembled set of fuel pipes for the engine is presented to an assembly operator. In this way the pre-filled pipes 10 can be fitted to the engine as if they were conventional fuel pipes with little or no disruption of the normal manufacture of the engine.

The wax infill 13 is one which cold flows under the pressure to be generated by the fuel pump 1, typically 300 to 900 bar. Whether a wax is suitable or not for present use can be readily tested by simply applying the appropriate pressure to a wax filled fuel pipe and seeing whether the wax cold flows sufficiently, usually so that the pipe is substantially cleared of wax within 2 to 20 seconds of continuous application of the expected operating pressure of the injection pump to which the fuel pipe is to be fitted. As a general guide it has been found that the waxes having penetrometer index values as determined by the ASTM-D 937 test method in the range 125 to 300 will be suitable for present use.

Suitable materials include materials which are greases, i.e. highly viscous fluids, as opposed to true solids under ambient conditions. Such greases are suitable for present use provided that they can be readily retained within the fuel pipes before they are assembled onto the engine. It is often customary for fuel pipes to be supplied with end caps to prevent the ingress of dirt and moisture during handling and storage and such end caps may also serve to retain the grease within the fuel pipe during handling and storage prior to use. The term wax is therefore used hereinafter to denote collectively true solids and viscous greases.

The wax desirably also has a softening temperature well above ambient temperature, typically at least 40°C and in the range from 45°C to 75°C.

The wax must also be capable of passing through the diesel engine without causing damage to the engine. The material may pass through without being degraded, as when it has a very high ignition temperature, but will usually be burned with the diesel fuel once the engine begins to fire. The cetane value of a fuel is a measure of its readiness to burn, diesel fuel having a cetane value of from 45 to 50, and it is preferred that the wax should have a cetane value in excess of 50. The material should also be compatible with any oil film on the wall of the cylinder bore and/or be capable of providing a lubricant film upon the wall of the bore.

Particularly preferred materials for present use include microcrystalline natural or synthetic waxes or greases, notably paraffin waxes or greases, rosin ester waxes, polyolefin waxes or greases, for example the polyethylene waxes obtained from the lighter fractions of the cracking of naphtha and petroleum. If desired, the wax or grease may be used in the form of a derivative thereof, e.g. as an oxidised or maleinised derivative. The wax may also be a polymeric material, for example a hydrocarbon resin such as one derived from hydrocarbons having an aliphatic C₅ to C₉ chain length, or polyolefins, typically polyethylene resins with a mean molecular weight of less than 1500, e.g. 500 to 1200, and an acid number of less than 1 (expressed as mg KOH/g). Suitable hydrocarbon resins for present use thus include polyolefins, notably polyethylene, polypropylene or polybutylene; those derived from C₅ to C₉ chain aliphatic compounds, e.g. those obtained by the steam cracking of naphthas; polyterpenes, notably wood rosins, tall oil or balsam resins, which can be esterified or hydrogenated if desired; and aromatic compounds, e.g. styrenes such as methyl styrenes.

The fuel pipe 10 is filled with the wax prior to initial start up of the engine. The filling is carried out using any suitable conventional technique, preferably during the assembly and packaging of the fuel pipe at a location remote from the assembly of the engine. If desired, the filling operation can be carried out at above the melting point of the wax so that the material is molten to aid flow into the fuel pipe.

The pre-filled fuel pipe or group of fuel pipes is assembled onto the engine in the customary manner. The invention thus causes minimal interruption or alteration to the conventional assembly of an engine.

When it is desired to start up the engine initially, e.g. for a test run, fuel is fed under pressure through the outlet from the injection pump into fuel pipe 10. The pressurised fuel bears against the plug of wax and causes it to be progressively ejected through the injector into the cylinder bore. Since the plug is essentially solid and incompressible, little or no fuel is driven back into the pump at the end of each feed stroke of the pump, so that the fuel pipe becomes filled with fuel and problems with bleeding the fuel line are overcome. Furthermore, since bleeding is not required, any leaks of fuel, lubricant or coolant will not be masked by bled fuel from the fuel pipe.

## Claims

1. A fuel conduit adapted for mounting in the fuel system of a diesel engine between the outlet (2) from the fuel injector pump (1) and the inlet to an injector (11) through which fuel is to be fed to a cylinder bore of the engine, characterised in that the conduit contains a material (13) which is normally non-mobile under ambient conditions but which can be moved and/or becomes mobile when contacted with diesel fuel under pressure, which material (13) can be passed through the injector (11) and through the diesel engine during its compression and exhaust strokes without causing damage to the engine.

2. A fuel conduit as claimed in claim 1, wherein the said material is a room temperature solid wax having a penetrometer index value in the range 125 to 300 as determined by the ASTM-D 937 method.

3. A fuel conduit as claimed in claim 2, wherein the wax is a paraffin wax.

4. A fuel conduit as claimed in any one of claims 1 to 3, wherein the said material has a cetane number in excess of 50.

5. A fuel line assembly comprising a plurality of the fuel conduits as claimed in any one of claims 1 to 4 arranged in parallel with one another and retained as a group by one or more connecting members (15).

6. A fuel conduit as claimed in any one of claims 1 - 4 for mounting in the fuel system of a diesel engine which has an injector pump (1) provided with a reverse flow damping valve as the outlet valve serving a fuel conduit.

7. A method for starting up a diesel engine characterised in that the fuel lines between the injector pump (1) and the injectors (11) through which fuel is fed to the cylinder bores of the engine are substantially filled initially with a material (13) which is normally non-mobile under ambient conditions but which can be moved and/or becomes mobile when contacted with diesel fuel under pressure, and starting the engine so that the material (13) is passed through the injectors (11) and through the engine without causing damage to the engine.

8. A method as claimed in claim 7 when carried out on a newly assembled engine.

## Patentansprüche

1. Kraftstoffleitung zum Einbau in das Kraftstoffsystem eines Dieselmotors, zwischen der Auslaßöffnung (2) der Kraftstoffeinspritzpumpe (1) und dem Einlaß einer Einspritzdüse (11), durch welche Kraftstoff in eine Zylinderbohrung des Motors gefördert wird,
dadurch gekennzeichnet, daß die Leitung einen Stoff (13) enthält, der normalerweise bei Raumbedingungen nichtflüssig ist, der jedoch verdrängt-werden kann und/oder flüssig wird, wenn er mit Dieselkraftstoff unter Druck in Berührung kommt, wobei dieser Stoff (13) bei den Kompressions- und Auspuffhüben des Motors durch die Einspritzdüse (11) und durch den Motor hindurchgeführt werden kann, ohne den Motor zu beschädigen.

2. Kraftstoffleitung nach Anspruch 1, worin besagter Stoff ein bei Raumtemperatur festes Wachs ist, mit einer nach dem Verfahren gemäß ASTM-D 937 bestimmten Penetrationszahl in einem Bereich von 125 bis 300.

3. Kraftstoffleitung nach Anspruch 2, worin das Wachs ein Paraffinwachs ist.

4. Kraftstoffleitung nach einem beliebigen der Ansprüche 1 bis 3, worin besagter Stoff eine Cetanzahl von über 50 aufweist.

5. Baueinheit aus Kraftstoffleitungen, bestehend aus einer Mehrzahl von Kraftstoffleitungen nach einem beliebigen der Ansprüche 1 bis 4, die parallel zueinander ausgerichtet sind und durch ein oder mehrere Verbindungselement(e) (15) gruppenweise zusammengehalten werden.

6. Kraftstoffleitung nach einem beliebigen der Ansprüche 1 bis 4, zum Einbau in das Kraftstoffsystem eines Dieselmotors, welcher eine Einspritzpumpe (1) umfaßt, die mit einem Rückstrom-Dämpfungsventil als Auslaßventil für eine Kraftstoffleitung versehen ist.

7. Verfahren zur Inbetriebnahme eines Dieselmotors, dadurch gekennzeichnet, daß die Kraftstoffleitungen zwischen der Einspritzpumpe (1) und den Einspritzdüsen (11), durch welche Kraftstoff in die Zylinderbohrungen des Cotors gefördert wird, zunächst mit einem Stoff (13) im wesentlichen gefüllt sind, der normalerweise unter Raumbedingungen nichtflüssig ist, der jedoch verdrängt werden kann und/oder flüssig wird, wenn er mit Dieselkraftstoff unter Druck in Berührung kommt, und daß der Motor derart angelassen wird, daß der Stoff (13) ohne den Motor zu beschädigen durch die Einspritzdüsen (11) und durch den Motor geleitet wird.

8. Verfahren nach Anspruch 7, angewandt bei einem neumontierten Motor.

## Revendications

1. Conduite de carburant adaptée pour être installée dans le système de carburant d'un moteur diesel, entre la sortie (2) de la pompe d'injection (1) et l'entrée d'un injecteur (11), à travers lequel le carburant doit être délivré dans un alésage de cylindre du moteur,
caractérisée en ce que la conduite contient une matière (13) qui est normalement non-fluide aux conditions ambiantes et qui par contre, peut être déplacée et/ou devient fluide au contact du carburant diesel sous pression, cette matière (13) pouvant être passée à travers l'injecteur (11) et à travers le moteur diesel durant les courses de compression et d'échappement de celui-ci sans entraîner de dommage du moteur.

2. Conduite de carburant selon la revendication 1, dans laquelle ladite matière est une cire solide à température ambiante ayant un indice de pénétrométrie de l'ordre de 125 à 300, déterminé par le procédé selon ASTM-D 937.

3. Conduite de carburant selon la revendication 2, dans laquelle la cire est une cire paraffine.

4. Conduite de carburant selon l'une quelconque les revendications 1 à 3, dans laquelle ladite matière a un indice de cétane supérieur à 50.

5. Ensemble de conduites de carburant comprenant plu sieurs conduites de carburant selon l'une quelconque des revendications 1 à 4, disposées parallèlement les une au autres et maintenues en groupe au moyen d'un ou de plusieurs éléments connecteurs (15).

6. Conduite de carburant selon l'une quelconque des revendications 1 à 4, destinée à être installée dans le système de carburant d'un moteur diesel comprenant une pompe d'injection (1) pourvue d'un clapet amortisseur de reflux constituant le clapet de sortie desservant une conduite de carburant.

7. Procédé de mise en marche d'un moteur diesel, caractérisé en ce que les conduites de carburant comprises entre la pompe d'injection (1) et les injecteurs (11), à travers lesquels le carburant est acheminé vers les alésages des cylindres du moteur, sont essentiellement remplies initialement d'une matière (13) qui est normalement non-fluide aux conditions ambiantes et qui, par contre, peut être déplacée et/ou devient fluide au contact du carburant diesel sous pression, et caractérisé par le démarrage du moteur de manière telle que la matière (13) puisse passer à travers les injecteurs (11) et à travers le moteur sans provoquer de dommages au moteur.

8. Procédé selon la revendication 7, mis en oeuvre sur un moteur nouvellement assemblé.
